# EUROPEAN PATENT APPLICATION

(11) **EP 4 685 964 A1**
(43) Date of publication of application: **28.01.2026**
(21) Application number: 23928145.4
(22) Date of filing: 18.04.2023
(51) Int. Cl.: H01M 50/298

(54) **WIRE HARNESS PROTECTION SUPPORT AND BATTERY MODULE**

(30) Priority: 23.03.2023 CN 202310296101; 23.03.2023 CN 202320600022 U
(71) Applicant: Eve Energy Co., Ltd., Huizhou, Guangdong 516006 (CN)
(72) Inventor: YIN, Yihua, Huizhou, Guangdong 516006 (CN)
(74) Representative: Michalski Hüttermann & Partner Patentanwälte mbB
(86) International application number: PCT/CN2023/088839
(87) International publication number: WO 2024/192833

(57) **Abstract**

A wiring harness protection bracket and a battery module are provided. The wiring harness protection bracket includes a base plate and a protective cover. The base plate is mounted to an end plate and a connector is disposed on the base plate. The protective cover is disposed on the base plate. An explosion-proof valve of a cell adjacent to the connector is defined as a first explosion-proof valve. The protective cover is located between the first explosion-proof valve and the connector. A sensing wire harness is disposed to bypass the protective cover and is connected to the connector.

## Description

### CROSS-REFERENCE TO RELATED APPLICATION(S)

This application claims priority to Chinese Patent Application No. 202310296101.7, filed with China national intellectual property administration (CNIPA) on March 23, 2023, and Chinese Patent Application No. 202320600022.6, filed with CNIPA on March 23, 2023, which are incorporated herein by reference in their entireties.

### TECHNICAL FIELD

The disclosure relates to the technical field of batteries, and in particular, to a wiring harness protection bracket and a battery module.

### BACKGROUND

Temperature/pressure sensing wire harnesses of batteries are disposed on a battery module and extend along a stacking direction of multiple cells constituting the battery module. End portions of the temperature/pressure sensing wire harnesses are gathered and connected to a connector, and the connector is located adjacent to an end plate of the battery module for connection to a battery management system (BMS).

In order to improve safety and to prevent the temperature/pressure sensing wire harness from being subjected to pulling forces due to disorder or vibration of the battery module during use, which may cause loosening of a connection structure between a sensing wire and a busbar, the related art generally employs a wire harness fixture to secure the temperature/pressure sensing wire harness on an upper portion of the battery module. However, in a section of temperature/pressure sensing wire harness adjacent to the connector, the respective sensing wires are individually connected to the connector, that is, the sensing wires in this section are difficult to be bundled together. Moreover, in a case where an explosion-proof valve of a cell adjacent to the connector is oriented toward the upper portion of the battery module, high-temperature gas ejected through the explosion-proof valve during thermal runaway of the cell may easily scorch the sensing wires in this section adjacent to the connector, thereby adversely affecting battery monitoring.

### SUMMARY

In view of the deficiencies in the related art, an objective of the disclosure is to provide a wiring harness protection bracket, which is capable of fixing a sensing wire harness while simultaneously protecting the sensing wire harness.

Another objective of the disclosure is to provide a battery module. The sensing wire harness of the battery module with improved safety and a connection structure between the sensing wire harness and the connector has high reliability.

In a first aspect, a wiring harness protection bracket is provided in the disclosure. The wiring harness protection bracket includes a base plate and a protective cover. The base plate is mounted to an end plate, and a connector is disposed on the base plate. The protective cover is disposed on the base plate. An explosion-proof valve of a cell adjacent to the connector is defined as a first explosion-proof valve, the protective cover is located between the first explosion-proof valve and the connector, and a sensing wire harness is disposed to bypass the protective cover and is connected to the connector.

In an example, the protective cover defines a protective notch, and an opening end of the protective notch faces the first explosion-proof valve.

In an example, an inner wall of the protective notch forms a protective surface, and the protective surface is a cylindrical surface.

In an example, a generatrix of the cylindrical surface is a straight line, an end of the generatrix adjacent to the cell is defined as a lower end of the generatrix, and an end of the generatrix away from the cell is an upper end of the generatrix; in a horizontal direction, a distance between the lower end of the generatrix and the first explosion-proof valve is greater than or equal to a distance between the upper end of the generatrix and the first explosion-proof valve.

In an example, the protective surface has a buffer surface that is inclined toward the first explosion-proof valve.

In an example, a buffer groove is defined on the protective surface, and the buffer surface is on an inner wall of the buffer groove.

In an example, a fixing lug is provided on the base plate, the fixing lug is located outside the protective cover, and the sensing wire harness is located between the fixing lug and the connector.

In an example, the fixing lug has a root portion and a lug portion connected to the root portion. The root portion is disposed on the base plate and adjacent to the protective cover, and a gap is defined between the lug portion and the base plate, the gap serves as a wire fixing groove, and the sensing wire harness is at least partially received in the wire fixing groove.

In an example, the root portion extends to an outer wall of the protective cover.

In an example, a clamping structure is provided on the base plate, and the clamping structure is configured to be clamped with the connector.

In an example, a heat riveting post is provided on the base plate.

In an example, a clamping protrusion is provided on the base plate, and the clamping protrusion is operable to be clamped with the end plate.

In a second aspect, a battery module is provided in the examples of the disclosure. The battery module includes a connector, a sensing wire harness, and the above-mentioned wiring harness protection bracket. The connector is mounted to the wiring harness protection bracket, and the sensing wire harness is disposed to bypass the protective cover and is connected to the connector.

The technical solutions of the examples of the disclosure have at least the following advantages and beneficial effects.

The protective cover of the disclosure is disposed between the connector and the cell adjacent to the connector. The sensing wire harness is disposed to bypass the protective cover and is connected to the connector, a section of the sensing wire harness that bypasses the protective cover (i.e., a section of the sensing wire harness adjacent to the connector) is located between the connector and the protective cover. As such, the protective cover can block, in a horizontal direction, the explosion-proof valve of the cell adjacent to the connector, thereby preventing high-temperature gas ejected through the explosion-proof valve during thermal runaway from scorching the section of the sensing wire harness adjacent to the connector, and thus improving safety.

### BRIEF DESCRIPTION OF THE DRAWINGS

FIG. 1 is a schematic perspective structural view of a wiring harness protection bracket provided in an example of the disclosure.
FIG. 2 is a schematic structural view of an inner wall of a protective cover provided in an example of the disclosure.
FIG. 3 is a schematic structural view of an inner wall of a protective cover provided in another example of the disclosure.
FIG. 4 is a schematic structural view of an inner wall of a protective cover provided in still another example of the disclosure.
FIG. 5 is a first schematic perspective structural view of a battery module provided in an example of the disclosure.
FIG. 6 is a second schematic perspective structural view of a battery module provided in an example of the disclosure.

Reference numerals are described as follows:
100: wiring harness protection bracket; 101: base plate; 1011: first plate body; 1012: second plate body; 102: clamping protrusion; 103: clamping structure; 1031: first clamping slot; 1032: second clamping slot; 1033: limiting protrusion; 104: protective cover; 1041: protective surface; 1042: buffer surface; 1043: buffer groove; 105: fixing lug; 1051: root portion; 1052: lug portion; 106: heat riveting post; 107: wire fixing groove; 201: end plate; 2011: molding groove; 202: cell; 2021: first explosion-proof valve; 203: sensing wire harness; 204: connector; 2041: clamping strip; 205: polycarbonate film.

### DETAILED DESCRIPTION

In the illustration of the disclosure, it may be noted that if orientation or positional relationships indicated by terms such as "upper," "lower," "front," "rear," "left," "right," "vertical," "horizontal," "upper," "lower," "inner," and "outer" are involved, they are based on the orientation or positional relationships illustrated in the accompanying drawings, and are merely for the convenience of describing the disclosure and simplifying the description, rather than indicating or implying that the devices or components referred to must have a specific orientation, be constructed and operated in a specific orientation. Therefore, these terms shall not be construed as limiting the disclosure.

In the illustration of the disclosure, unless otherwise expressly defined and limited, the terms "first" and "second" are merely used for descriptive purposes and may not be understood as indicating or implying relative importance; the term "a plurality of/multiple" means two or more; the term "and/or" includes any and all combinations of one or more of the associated listed items. In particular, reference to "the/said" or "a" object is likewise intended to mean one of a possible multiple of such objects.

Furthermore, in the illustration of the disclosure, it may be understood that the orientation terms such as "upper," "lower," "inner," and "outer" are described based on the perspective illustrated in the accompanying drawings, and may not be construed as limitations to the specific examples. It may also be understood that, in context, when an element or feature is referred to as being connected "to," "above," "below," "inside," or "outside" another element (one or more), it may be directly connected to or directly located above, below, inside, or outside the other element(s), or indirectly connected to or indirectly located above, below, inside, or outside the other element(s) through an intermediate element.

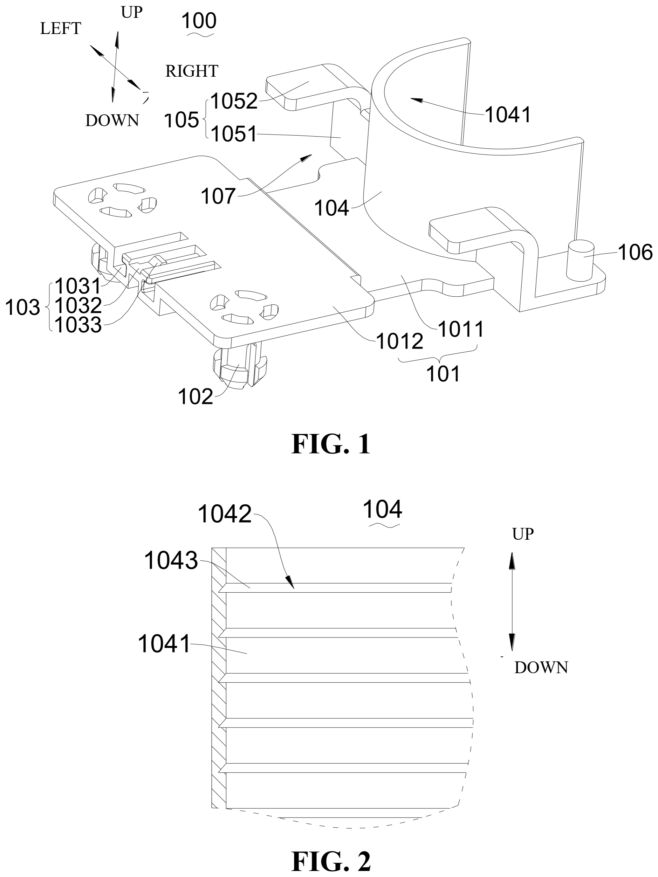

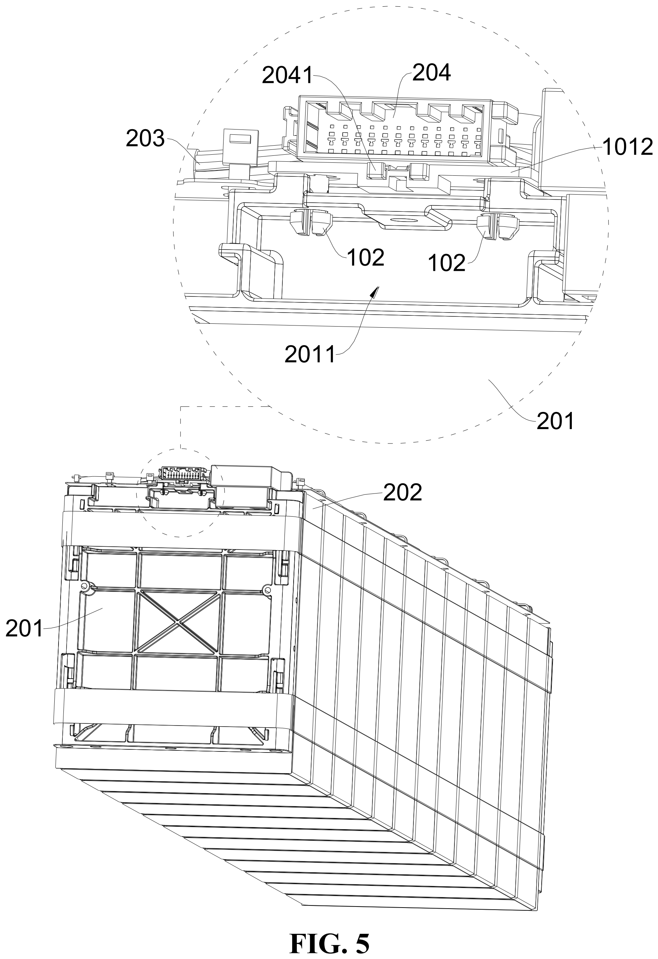

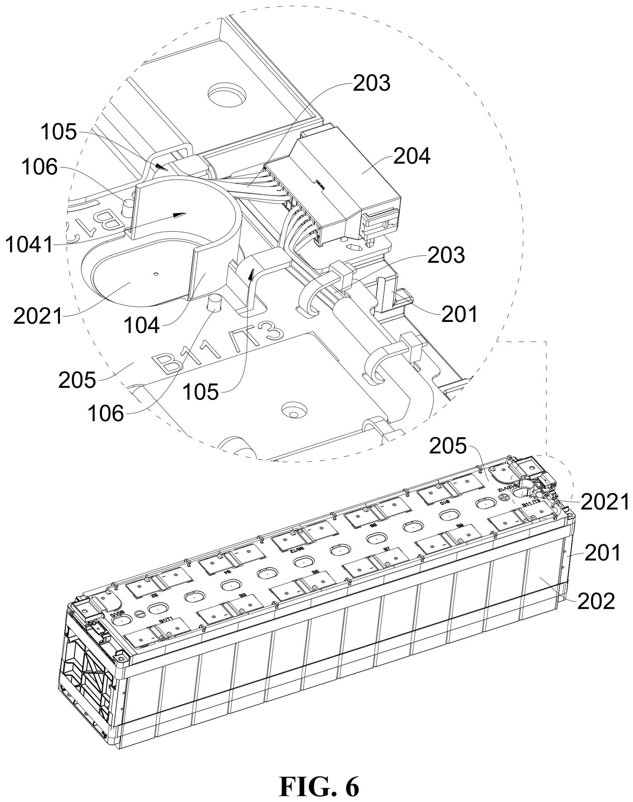

Referring to FIGS. 1 to 6, a wiring harness protection bracket is applied to a prismatic battery module as illustrated in FIGS. 5 and 6, and is used for fixing and protecting a section of a temperature/pressure sensing wire harness of the battery module that is adjacent to a connector 204. For ease of description, the temperature/pressure sensing wire harness is collectively referred to hereinafter as a sensing wire harness 203. The wiring harness protection bracket 100 includes a base plate 101 and a protective cover 104. The base plate 101 is mounted to an end plate 201, the connector 204 is disposed on the base plate 101, and the protective cover 104 is disposed on the base plate 101. An explosion-proof valve of a cell 202 adjacent to the connector 204 is defined as a first explosion-proof valve 2021. The protective cover 104 is located between the first explosion-proof valve 2021 and the connector 204, and the sensing wire harness 203 is disposed to bypass the protective cover 104 and is connected to the connector 204. In the examples, as illustrated in FIG. 6, the protective cover 104 is located between the connector 204 and the cell 202 adjacent to the connector 204. The sensing wire harness 203 is disposed to bypass the protective cover 104 and is connected to the connector 204, a section of the sensing wire harness 203 that bypasses the protective cover 104 (i.e., a section of the sensing wire harness 203 adjacent to the connector 204) is located between the connector 204 and the protective cover 104. As such, the protective cover 104 can block the first explosion-proof valve 2021 in a horizontal direction, thereby preventing high-temperature gas ejected through the first explosion-proof valve 2021 during thermal runaway from scorching the section of the sensing wire harness 203 adjacent to the connector 204, and thus improving safety.

Further, the protective cover 104 defines a protective notch, and an opening end of the protective notch faces the first explosion-proof valve 2021. In the examples, the opening end of the protective notch is arranged to face the first explosion-proof valve 2021, such that the first explosion-proof valve 2021 is partially surrounded by the protective cover 104, thereby increasing a protective surface area of the protective cover 104 and further enhancing the protective effect of the protective cover 104 on the sensing wire harness 203.

Still further, an inner wall of the protective notch forms a protective surface 1041, which is a cylindrical surface. The cylindrical protective surface 1041 may conform to the external profile of the first explosion-proof valve 2021, and is capable of better isolating and protecting, in the horizontal direction, an end of the first explosion-proof valve 2021 adjacent to the connector 204 (specifically, a space at an end of the first explosion-proof valve 2021 adjacent to a section of the sensing wire harness 203 adjacent to the connector 204), thereby preventing high-temperature gas ejected through the first explosion-proof valve 2021 from diffusing toward the sensing wire harness 203, and ensuring safety of the sensing wire harness 203.

In the examples, a generatrix of the cylindrical surface is defined as a straight line, an end of the generatrix adjacent to the cell 202 is defined as a lower end of the generatrix, and an end of the generatrix away from the cell 202 is an upper end of the generatrix. In the horizontal direction, a distance between the lower end of the generatrix and the first explosion-proof valve 2021 is greater than or equal to a distance between the upper end of the generatrix and the first explosion-proof valve 2021.

Specifically, as illustrated in FIG. 2, in the examples, in the horizontal direction, the distance between the lower end of the generatrix and the first explosion-proof valve 2021 is equal to the distance between the upper end of the generatrix and the first explosion-proof valve 2021. That is, the generatrix of the cylindrical surface is perpendicular to an upper surface of the battery module where the first explosion-proof valve 2021 is located. In the examples, high-temperature gas ejected through the first explosion-proof valve 2021 is guided to eject and diffuse upward for pressure relief under a constraint of the protective surface 1041.

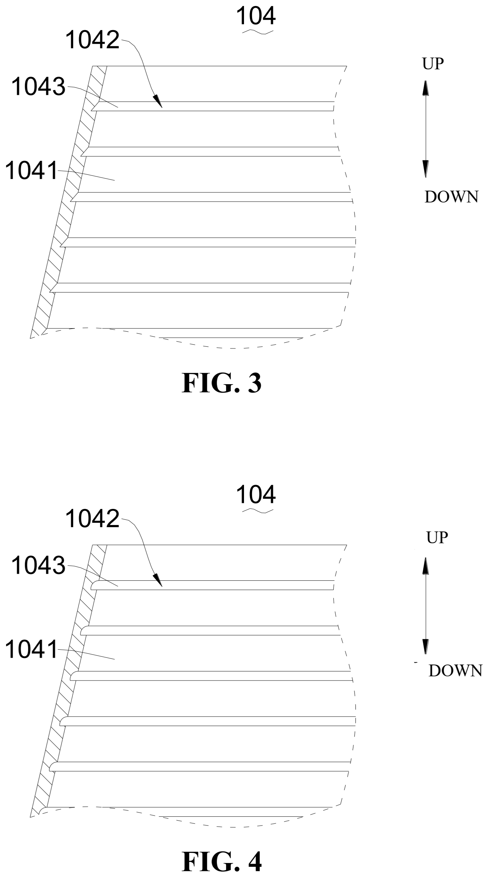

In another example, as illustrated in FIG. 3, in the horizontal direction, the distance between the lower end of the generatrix and the first explosion-proof valve 2021 is greater than the distance between the upper end of the generatrix and the first explosion-proof valve 2021. In the examples, the protective surface 1041 is inclined upward toward the first explosion-proof valve 2021. With this arrangement, when high-temperature gas is ejected through the first explosion-proof valve 2021 during thermal runaway, the high-temperature gas is converged horizontally, thereby increasing a distance between an ejection path of the high-temperature gas and the section of the sensing wire harness 203 adjacent to the connector 204, and further reducing the adverse impact of the high-temperature gas on this section of the sensing wire harness 203.

In some examples, a heat insulation layer may be provided on the protective surface 1041. The heat insulation layer may be a mica plate, for example, to prevent high-temperature gas from damaging the protective cover 104 and conducting heat to the connector 204, which would cause damage to the connector 204.

In the examples, the protective surface 1041 has a buffer surface 1042 that is inclined toward the first explosion-proof valve 2021. The buffer surface 1042 can exert a certain obstructing effect on high-temperature gas that flows upward along the protective surface 1041, thereby reducing its impact velocity and lowering the adverse impact of the high-temperature gas on other components of the battery module located along a flow path of the high-temperature gas.

Further, as illustrated in FIGS. 2 and 3, a buffer groove 1043 is defined on the protective surface 1041, and the buffer surface 1042 is on an inner wall of the buffer groove 1043. The buffer groove 1043 extends in a circumferential direction of the first explosion-proof valve 2021. In the examples, multiple buffer grooves 1043 are arranged at intervals from bottom to top on the protective surface 1041. In other examples, as illustrated in FIG. 4, the buffer surface 1042 may be in the form of an arc-shaped surface, with an opening of the arc-shape surface facing the first explosion-proof valve 2021. When high-temperature gas ejected through the first explosion-proof valve 2021 flows upward along the protective surface 1041, a portion of the high-temperature gas will enter the buffer groove 1043. Under the action of the inner wall of the buffer groove 1043 (i.e., the buffer surface 1042), a circulation flow is formed, which will change a flow direction of this portion of the high-temperature gas. During the circulation flowing, this portion of the high-temperature gas will apply an external force on the high-temperature gas ejected through a central region of the first explosion-proof valve 2021, mainly as a force opposite to an ejection direction of the high-temperature gas ejected through the central region of the first explosion-proof valve 2021. As a result, an ejection velocity of the high-temperature gas within a region of the protective cover 104 is reduced, thereby further lowering the adverse impact of the high-temperature gas on other components of the battery module located along the flow path of the high-temperature gas. To a certain extent, a diffusion range of the high-temperature gas is also reduced (since the diffusion range decreases as the ejection velocity decreases), thus reducing the likelihood that the high-temperature gas will affect the sensing wire harness 203.

In the examples, to fix a segment of the sensing wire harness 203 adjacent to the connector 204 and to prevent the sensing wire harness 203 from exerting a pulling force on the connector 204, which may adversely affect the reliability of the connection structure between the sensing wire harness 203 and the connector 204, a fixing lug 105 is provided on the base plate 101. The fixing lug 105 is located outside the protective cover 104. The sensing wire harness 203 is located between the fixing lug 105 and the connector 204. Specifically, as illustrated in FIGS. 1 and 6, two fixing lugs 105 are respectively disposed on left and right sides of the protective cover 104 in a left-right direction, corresponding to the sensing wire harnesses 203 disposed on the left and right sides of the battery module, that is, on both sides of the battery module in a width direction.

Further, the fixing lug 105 has a root portion 1051 and a lug portion 1052 connected to the root portion 1051. The root portion 1051 is disposed on the base plate 101 and adjacent to the protective cover 104. A gap is defined between the lug portion 1052 and the base plate 101. The gap serves as a wire fixing groove 107, and the sensing wire harness 203 is at least partially received in the wire fixing groove 107. In the examples, a width of the wire fixing groove 107 is smaller than an outer diameter of the sensing wire harness 203. It may be noted that the width of the wire fixing groove 107 refers to the shortest distance between a lower side surface of the lug portion 1052 and an upper side surface of the base plate 101. Here, the root portion 1051 and the lug portion 1052 are integrally formed. The fixing lug 105 is a plastic support, and the lug portion 1052 is sheet-shaped. With this structure, the lug portion 1052 has the capability of elastic deformation. In use, the sensing wire harness 203 is pressed into the wire fixing groove 107. Since the outer diameter of the sensing wire harness 203 is larger than the width of the wire fixing groove 107, the lug portion 1052 is elastically deformed under force, thereby clamping the sensing wire harness 203 within the wire fixing groove 107, thus realizing the fixation of the sensing wire harness 203 by the fixing lug 105.

In other examples, an anti-slip groove may form on an inner wall of the wire fixing groove 107 (not illustrated). It may be noted that the inner wall of the wire fixing groove 107has the lower side surface of the lug portion 1052 and the upper side surface of the base plate 101 corresponding to the lower side surface of the lug portion 1052. The anti-slip groove includes, but is not limited to, one or more of a V-shaped groove, a U-shaped groove, or an arc-shaped groove. The anti-slip groove can increase a friction force between the inner wall of the wire fixing groove 107 and the sensing wire harness 203, thereby enhancing the fixing capability of the fixing lug 105 to the sensing wire harness 203.

In another example, an anti-slip layer may be disposed on the inner wall of the wire fixing groove 107 (not illustrated). For example, the anti-slip layer may be a silica gel layer. The principle is merely to increase the friction force between the inner wall of the wire fixing groove 107 and the sensing wire harness 203.

As illustrated in FIG. 1, in the examples, the root portion 1051 extends to an outer wall of the protective cover 104. Specifically, the fixing lug 105, the protective cover 104, and the base plate 101 are integrally injection-molded. The root portion 1051 extends to the protective cover 104 to block a gap between the fixing lug 105 and the protective cover 104. The root portion 1051 and the protective cover 104 cooperate with each other to further increase a blocking area of the wiring harness protection bracket 100 to the first explosion-proof valve 2021, i.e., increase a protective surface area to the sensing wire harness 203, thereby further reducing the possibility of high-temperature gas generated during thermal runaway at the first explosion-proof valve 2021 scorching the sensing wire harness 203, and thus improving safety.

In the examples, as illustrated in FIG. 5, a clamping strip 2041 and a clamping block (not illustrated) are disposed on a side wall of the connector 204, with the clamping block located on one side of the clamping strip 2041. A clamping structure 103 is provided on the base plate 101 for assembling the connector 204. Specifically, as illustrated in FIG. 1, the clamping structure 103 includes a first clamping slot 1031 and a second clamping slot 1032 that are formed on the base plate 101. A cross section of the first clamping slot 1031 is substantially L-shaped and is adapted to a cross section of the clamping strip 2041. The first clamping slot 1031 is configured to be clamped with the connector 204. A limiting protrusion 1033 is disposed in the second clamping slot 1032. The limiting protrusion 1033 has a guide slope on a side of the limiting protrusion 1033 away from the protective cover 104, and the guide slope is configured for cooperating with the clamping block during assembly. In use, the clamping strip 2041 is inserted into the first clamping slot 1031, the first clamping slot 1031 limits the clamping strip 2041, i.e., the first clamping slot 1031 limits the connector 204 in an up-down direction. The clamping block may slide along the second clamping slot 1032 to a rear side of the limiting protrusion 1033. The limiting protrusion 1033 limits the clamping block in an extension direction of the second clamping slot 1032, so as to limit the connector 204, thereby enabling the connector 204 to be stably and firmly assembled onto the base plate 101.

In the examples, an extension direction of the first clamping slot 1031 is parallel to the extension direction of the second clamping slot 1032.

As illustrated in FIG. 1, a heat riveting post 106 is disposed on the base plate 101. The heat riveting post 106 penetrates through a polycarbonate film 205 disposed on an upper portion of the cell 202. The heat riveting post 106 is used to fix the polycarbonate film 205. In use, the polycarbonate film 205 and the heat riveting post 106 are fixed through heat-riveting.

In the examples, as illustrated in FIG. 5, a clamping protrusion 102 is provided on the base plate 101, and the clamping protrusion 102 is operable to be clamped with the end plate 201. Here, a molding groove 2011 is defined on an outer side surface of the end plate 201, and a mounting hole is defined on an upper surface of the end plate 201 and is communication with the molding groove 2011. The clamping protrusion 102 is embedded in the mounting hole to realize the assembly of the base plate 101 and the end plate 201. The clamping protrusion 102 may be an aircraft fastener.

As illustrated in FIG. 1, the base plate 101 includes a first plate body 1011 and a second plate body 1012 connected to the first plate body 1011. The second plate body 1012 is higher than the first plate body 1011 in the up-down direction so as to adapt to a contour transition from the cell 202 to the end plate 201 of the battery module, such that all portions of the base plate 101 can better fit the battery module, thereby improving the structure compactness of the battery module after being assembled with the wiring harness protection bracket 100. In the examples, the protective cover 104 and the fixing lug 105 are disposed on the first plate body 1011, and the clamping protrusion 102 and the clamping structure 103 are disposed on the second plate body 1012.

In the examples, the wiring harness protection bracket 100 can protect the sensing wire harness 203 while fixing the sensing wire harness 203. Specifically, the wiring harness protection bracket 100 can prevent the sensing wire harness 203 from being scorched by the high-temperature gas ejected during thermal runaway at the first explosion-proof valve 2021, and can also stably fix the connector 204. In cooperation with the fixing lug 105 on the wiring harness protection bracket 100, the connection structure between the sensing wire harness 203 and the connector 204 can be stabilized.

The battery module includes the connector 204, the sensing wire harness 203, and the above-described wiring harness protection bracket 100. The connector 204 is mounted to the wiring harness protection bracket 100, and the sensing wire harness 203 is disposed to bypass the protective cover 104 and is connected to the connector 204. The battery module has improved safety for the sensing wire harness 203, and the connection structure between the sensing wire harness 203 and the connector 204 has high reliability.

## Claims

1. A wiring harness protection bracket, comprising:
a base plate (101) mounted to an end plate (201), wherein a connector (204) is disposed on the base plate (101); and
a protective cover (104) disposed on the base plate (101), wherein an explosion-proof valve of a cell (202) adjacent to the connector (204) is defined as a first explosion-proof valve (2021), the protective cover (104) is located between the first explosion-proof valve (2021) and the connector (204), and a sensing wire harness (203) is disposed to bypass the protective cover (104) and is connected to the connector (204).

2. The wiring harness protection bracket according to claim 1, wherein the protective cover (104) defines a protective notch, and an opening end of the protective notch faces the first explosion-proof valve (2021).

3. The wiring harness protection bracket according to claim 2, wherein an inner wall of the protective notch forms a protective surface (1041), and the protective surface (1041) is a cylindrical surface.

4. The wiring harness protection bracket according to claim 3, wherein
a generatrix of the cylindrical surface is a straight line, an end of the generatrix adjacent to the cell (202) is defined as a lower end of the generatrix, and an end of the generatrix away from the cell (202) is an upper end of the generatrix; and
in a horizontal direction, a distance between the lower end of the generatrix and the first explosion-proof valve (2021) is greater than or equal to a distance between the upper end of the generatrix and the first explosion-proof valve (2021).

5. The wiring harness protection bracket according to claim 3 or 4, wherein the protective surface (1041) has a buffer surface (1042) that is inclined toward the first explosion-proof valve (2021).

6. The wiring harness protection bracket according to claim 5, wherein a buffer groove (1043) is defined on the protective surface (1041), and the buffer surface (1042) is on an inner wall of the buffer groove (1043).

7. The wiring harness protection bracket according to claim 1, wherein a fixing lug (105) is provided on the base plate (101) and located outside the protective cover (104), and the sensing wire harness (203) is located between the fixing lug (105) and the connector (204).

8. The wiring harness protection bracket according to claim 7, wherein
the fixing lug (105) has a root portion (1051) and a lug portion (1052) connected to the root portion (1051); and
the root portion (1051) is disposed on the base plate (101) and adjacent to the protective cover (104), and a gap is defined between the lug portion (1052) and the base plate (101), the gap serves as a wire fixing groove (107), and the sensing wire harness (203) is at least partially received in the wire fixing groove (107).

9. The wiring harness protection bracket according to claim 8, wherein the root portion (1051) extends to an outer wall of the protective cover (104).

10. The wiring harness protection bracket according to claim 1, wherein a clamping structure (103) is provided on the base plate (101), and the clamping structure (103) is configured to be clamped with the connector (204).

11. The wiring harness protection bracket according to claim 1, wherein a heat riveting post (106) is provided on the base plate (101).

12. The wiring harness protection bracket according to claim 1, wherein a clamping protrusion (102) is provided on the base plate (101), and the clamping protrusion is operable to be clamped with the end plate (201).

13. A battery module, comprising a connector (204), a sensing wire harness (203), and the wiring harness protection bracket (100) according to any one of claims 1 to 12, wherein the connector (204) is mounted to the wiring harness protection bracket (100), and the sensing wire harness (203) is disposed to bypass the protective cover (104) and is connected to the connector (204).
